# EUROPEAN PATENT APPLICATION

(11) **EP 4 790 594 A1**
(43) Date of publication of application: **12.08.2026**
(21) Application number: 25157106.3
(22) Date of filing: 11.02.2025
(51) Int. Cl.: G06N 3/0475, G06N 5/025

(54) **KNOWLEDGE GRAPH GENERATION SYSTEM**

(71) Applicant: ABB SCHWEIZ AG, 5400 Baden (CH)
(72) Inventor: BHATTACHARYA, Nilavra, 68167 Mannheim (DE); GITZEL, Ralf, 68165 Mannheim (DE); TAMASCELLI, Nicola, 68259 Mannheim (DE); SONG, Chen, 68163 Mannheim (DE); BORRISON, Reuben, 68782 Brühl (DE); FORMAGGIO, Alberto, 45100 Rovigo (IT)
(74) Representative: Maiwald GmbH

(57) **Abstract**

The present invention relates to a knowledge graph generation system (100), comprising:
- an input unit (20); and
- a knowledge graph generator (10);
wherein the input unit is configured to receive a plurality of service reports, wherein each service report comprises natural language;
wherein the input unit is configured to provide the plurality of service reports to the knowledge graph generator;
wherein the knowledge graph generator is configured to implement a Large Language Model (LLM);
wherein the knowledge graph generator is configured to utilize the LLM to identify entries from the natural language in the plurality of service reports, wherein the identified entries comprise names and types of instruments, issues that need to be addressed for those instruments, and actions taken by service technicians to mitigate the issues;
wherein the knowledge graph generator is configured to utilize the identified entries to form a plurality of rules, wherein each rule comprises a tuple of one instrument type, one issue, and an action step or series of action steps taken to mitigate the issue;
wherein the knowledge graph generator is configured to utilize the plurality of rules to generate a plurality of knowledge graph nodes, wherein each instrument type, issue, and action step are transformed into separate knowledge graph nodes; and
wherein the knowledge graph generator is configured to utilize the plurality of knowledge graph nodes to generate a knowledge graph, the generation comprising forming a plurality of node groups, wherein each node group comprises a plurality of knowledge graph nodes that are linked together.

## Description

### FIELD OF THE INVENTION

The present invention relates to a knowledge graph generation system, and a knowledge graph generation method, as well as a computer program element. This finds utility for the maintenance of electrical equipment such as low, medium or high voltage switchgear.

### BACKGROUND OF THE INVENTION

While the level of required knowledge for service personnel increases, a wave of new, young and inexperienced people arrive and need tools to support them. This applies to many technical fields, one example being (low, medium and high voltage) switchgears.

Preventive and corrective maintenance of for example electrical equipment such as switchgears is a complex task that requires expert knowledge to address a wide range of potential issues. Past service reports can often contain valuable information and solution regarding commonly occurring faults, and potentially "rules" to solve such problems.

However, relevant information contained in such reports - as well as manuals and other knowledge bases - are scattered and disorganized. Furthermore, they can be in multiple different languages, based on their country of origin. This makes it a high-cognitive-effort task for future service technicians to navigate multiple documents and learn from past knowledge. Constructing a unified knowledge base from the plethora of available information is a technical challenge.

There is a need to address this issue.

### SUMMARY OF THE INVENTION

Therefore, it would be advantageous to have an improved support tool for service personnel working on low, medium and high voltage switchgear.

The object of the present invention is solved with the subject matter of the independent claims, wherein further embodiments are incorporated in the dependent claims.

In a first aspect, there is provided a knowledge graph generation system, comprising:
- an input unit; and
- a knowledge graph generator.

The input unit is configured to receive a plurality of service reports, wherein each service report comprises natural language. The input unit is configured to provide the plurality of service reports to the knowledge graph generator. The knowledge graph generator is configured to implement a Large Language Model (LLM). The knowledge graph generator is configured to utilize the LLM to identify entries from the natural language in the plurality of service reports. The identified entries comprise names and types of instruments, issues that need to be addressed for those instruments, and actions taken by service technicians to mitigate the issues. The knowledge graph generator is configured to utilize the identified entries to form a plurality of rules. Each rule comprises a tuple of one instrument type, one issue, and an action step or series of action steps taken to mitigate the issue. The knowledge graph generator is configured to utilize the plurality of rules to generate a plurality of knowledge graph nodes, where each instrument type, issue, and action step are transformed into separate knowledge graph nodes. The knowledge graph generator is configured to utilize the plurality of knowledge graph nodes to generate a knowledge graph, the generation comprising forming a plurality of node groups. Each node group comprises a plurality of knowledge graph nodes that are linked together.

It is to be noted that implementation of a Large Language Model (LLM), can mean utilizing an existing LLM to fit the specific needs, or can mean that an LLM is in effect constructed for the specific needs.

The knowledge graph nodes that are linked together can be considered as a rule relating to the action steps required to mitigate an issue for an instrument type.

In an example, the plurality of service reports comprise natural language in a plurality of different languages, the plurality of different languages comprising two or more of English, German, French, Italian, Spanish, French, Portuguese, Japanese, Chinese.

The plurality of different languages can be other than these languages, and could be any language of a service report.

Thus, the system works in one unified language, but is able to work with reports from many languages or indeed a single report with more than one language within it.

Thus, in effect the new development provides a pipeline that extracts electrical equipment and maintenance rule from multilingual natural language text in service reports, and employs a knowledge graph to appropriately store the extracted rules. In this manner, searching and information retrieval of relevant information for a current maintenance job in terms of locating the appropriate rules relating to the actions required to mitigate an issue at hand for a particular instrument type is made more efficient.

In an example, each knowledge graph node comprises at least one searchable attribute or property, the at least one searchable attribute or property comprising at least one of instrument type, issue, action step.

This makes searching with respect to instruments, issues, and actions more efficient.

In an example, the input unit is configured to receive at least one new service report. Each new service report comprises natural language. The input unit is configured to provide the at least one new service report to the knowledge graph generator. The knowledge graph generator is configured to utilize the LLM to identify entries from the natural language in the at least one new service report. The identified entries comprise names and types of instruments, issues that need to be addressed for those instruments, and actions taken by service technicians to mitigate the issues. The knowledge graph generator is configured to utilize the identified entries to form one or more new rules, where each new rule comprises a tuple of one instrument, one issue, and an action step or series of action steps taken to mitigate the issue. For each new rule the knowledge graph generator is configured to utilize the new rule to generate a plurality of new knowledge graph nodes, where the instrument type, issue, and each action step are transformed into separate new knowledge graph nodes.

In an example, the knowledge graph generator is configured to search the knowledge graph to determine if a linked node group has a knowledge graph node with an instrument type that is the same as an instrument type associated with a new rule. The knowledge graph generator is configured to link the plurality of new knowledge graph nodes associated with the new rule to knowledge graph nodes of the linked node group in the knowledge graph that has the knowledge graph node with an instrument type that is the same as the instrument type associated with a new rule. The knowledge graph generator is configured to form a new node group comprising the plurality of new knowledge graph nodes in the knowledge graph if no knowledge graph node with an instrument type that is the same as an instrument type associated with the new rule is found within the knowledge graph.

In an example, the knowledge graph generator is configured to search the knowledge graph to determine if a linked node group has a knowledge graph node with an issue that is the same or similar to an issue associated with a new rule. The knowledge graph generator is configured to link the plurality of new knowledge graph nodes associated with the new rule to knowledge graph nodes of the linked node group in the knowledge graph that has the knowledge graph node with an issue that is the same or similar to the issue associated with a new rule. The knowledge graph generator is configured to form a new node group comprising the plurality of new knowledge graph nodes in the knowledge graph if no knowledge graph node with an issue that is the same or similar to an issue associated with the new rule is found within the knowledge graph.

Thus, the knowledge graph can be efficiently and effectively updated when new service reports are available, to augment how issues on a particular instrument type can be mitigated and also to expand the knowledge graph with issues relating to new instrument types to ever expand the utility of the knowledge graph.

In an example, the input unit is configured to receive multimodal data. The multimodal data is not in a textual form. The input unit is configured to provide the multimodal data to the knowledge graph generator. The knowledge graph generator is configured to analyze the multimodal data and/or analyze information associated with the multimodal data to determine an associated node group in the knowledge graph and attach the multimodal data to the associated node group.

Thus, the knowledge graph can be augmented with non-textual information such as photos and bodycam feeds from service technicians, videos, sensor readings, recordings from AR and VR sessions with remote experts and so forth.

In an example, the system comprises an output unit. The output unit is configured to output the knowledge graph.

Thus, the knowledge graph can then be used on/by another system.

In a second aspect, there is provided a knowledge graph generating method, comprising:
- receiving, by an input unit, a plurality of service reports, wherein each service report comprises natural language;
- providing, by the input unit, the plurality of service reports to a knowledge graph generator;
- implementing, by the knowledge graph generator, a Large Language Model (LLM);
- utilizing, by the knowledge graph generator, the LLM to identify entries from the natural language in the plurality of service reports, wherein the identified entries comprise names and types of instruments, issues that need to be addressed for those instruments, and actions taken by service technicians to mitigate the issues;
- utilizing, by the knowledge graph generator, the identified entries to form a plurality of rules, wherein each rule comprises a tuple of one instrument type, one issue, and an action step or series of action steps taken to mitigate the issue;
- utilizing, by the knowledge graph generator, the plurality of rules to generate a plurality of knowledge graph nodes, wherein each instrument type, issue, and action step are transformed into separate knowledge graph nodes; and
- utilizing, by the knowledge graph generator, the plurality of knowledge graph nodes to generate a knowledge graph, the generation comprising forming a plurality of node groups, wherein each node group comprises a plurality of knowledge graph nodes that are linked together.

It is to be noted that implementation of a Large Language Model (LLM), can mean utilizing an existing LLM to fit the specific needs, or can mean that an LLM is in effect constructed for the specific needs.

In an example, the plurality of service reports comprise natural language in a plurality of different languages, the plurality of different languages comprising two or more of English, German, French, Italian, Spanish, French, Portuguese, Japanese, Chinese.

Thus, the method works in one unified language, but is able to work with reports from many languages or indeed a single report with more than one language within it.

In an example, each knowledge graph node comprises at least one searchable attribute or property, the at least one searchable attribute or property comprising at least one of instrument type, issue, action step.

In an example, the method comprises:
- receiving, by the input unit, at least one new service report, wherein each new service report comprises natural language;
- providing, by the input unit, the at least one new service report to the knowledge graph generator;
- utilizing, by the knowledge graph generator, the LLM to identify entries from the natural language in the at least one new service report, wherein the identified entries comprise names and types of instruments, issues that need to be addressed for those instruments, and actions taken by service technicians to mitigate the issues;

- utilizing, by the knowledge graph generator, the identified entries to form one or more new rules, wherein each new rule comprises a tuple of one instrument, one issue, and an action step or series of action steps taken to mitigate the issue; and
- for each new rule the method comprises utilizing, by the knowledge graph generator, the new rule to generate a plurality of new knowledge graph nodes, wherein the instrument type, issue, and each action step are transformed into separate new knowledge graph nodes.

In an example, the method comprises:
- searching, by the knowledge graph generator, the knowledge graph to determine if a linked node group has a knowledge graph node with an instrument type that is the same as an instrument type associated with a new rule;
- linking, by the knowledge graph generator, the plurality of new knowledge graph nodes associated with the new rule to knowledge graph nodes of the linked node group in the knowledge graph that has the knowledge graph node with an instrument type that is the same as the instrument type associated with a new rule; or
- forming, by the knowledge graph generator, a new node group comprising the plurality of new knowledge graph nodes in the knowledge graph if no knowledge graph node with an instrument type that is the same as an instrument type associated with the new rule is found within the knowledge graph.

In an example, the method comprises:
- searching, by the knowledge graph generator, the knowledge graph to determine if a linked node group has a knowledge graph node with an issue that is the same or similar to an issue associated with a new rule;
- linking, by the knowledge graph generator, the plurality of new knowledge graph nodes associated with the new rule to knowledge graph nodes of the linked node group in the knowledge graph that has the knowledge graph node with an issue that is the same or similar to the issue associated with a new rule; or
- forming, by the knowledge graph generator, a new node group comprising the plurality of new knowledge graph nodes in the knowledge graph if no knowledge graph node with an issue that is the same or similar to an issue associated with the new rule is found within the knowledge graph.

In an example, the method comprises:
- receiving, by the input unit, multimodal data, wherein the multimodal data is not in a textual form;
- providing, by the input unit. the multimodal data to the knowledge graph generator; and
- analyzing, by the knowledge graph generator, the multimodal data and/or analyze information associated with the multimodal data to determine an associated node group in the knowledge graph and attaching the multimodal data to the associated node group.

In an example, the method comprises outputting, by an output unit, the knowledge graph.

In a third aspect there is provided a computer program element for controlling a processor to carry out the method of the second aspect and any of its associated examples.

In an example, there is provided a computer readable medium having stored the computer element.

The computer program elements can for example be a software program but can also be a FPGA, a PLD or any other appropriate digital means.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows an exemplar knowledge graph generation system, where an optional element is shown with dashed lines; and
Fig. 2 shows a detailed embodiment of a knowledge graph generation system.

### DETAILED DESCRIPTION OF EMBODIMENTS

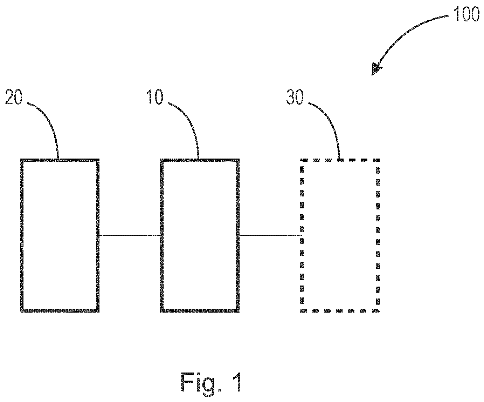

Fig. 1 shows an exemplar knowledge graph generation system 100 comprising:
- an input unit 20; and
- a knowledge graph generator 10.

The input unit is configured to receive a plurality of service reports, wherein each service report comprises natural language. The input unit is configured to provide the plurality of service reports to the knowledge graph generator. The knowledge graph generator is configured to implement a Large Language Model (LLM). The knowledge graph generator is configured to utilize the LLM to identify entries from the natural language in the plurality of service reports. The identified entries comprise names and types of instruments, issues that need to be addressed for those instruments, and actions taken by service technicians to mitigate the issues. The knowledge graph generator is configured to utilize the identified entries to form a plurality of rules. Each rule comprises a tuple of one instrument type, one issue, and an action step or series of action steps taken to mitigate the issue. The knowledge graph generator is configured to utilize the plurality of rules to generate a plurality of knowledge graph nodes, where each instrument type, issue, and action step are transformed into separate knowledge graph nodes. The knowledge graph generator is configured to utilize the plurality of knowledge graph nodes to generate a knowledge graph, the generation comprising forming a plurality of node groups. Each node group comprises a plurality of knowledge graph nodes that are linked together.

It is to be noted that implementation of a Large Language Model (LLM), can mean utilizing an existing LLM to fit the specific needs, or can mean that an LLM is in effect constructed for the specific needs.

The knowledge graph nodes that are linked together can be considered as a rule relating to the action steps required to mitigate an issue for an instrument type.

In an example, the plurality of service reports comprise natural language in a plurality of different languages, the plurality of different languages comprising two or more of English, German, French, Italian, Spanish, French, Portuguese, Japanese, Chinese.

The plurality of different languages can be other than these languages, and could be any language of a service report.

Thus, the system works in one unified language, but is able to work with reports from many languages or indeed a single report with more than one language within it.

Thus, in effect the new development provides a pipeline that extracts electrical equipment and maintenance rule from multilingual natural language text in service reports, and employs a knowledge graph to appropriately store the extracted rules. In this manner, searching and information retrieval of relevant information for a current maintenance job in terms of locating the appropriate rules relating to the actions required to mitigate an issue at hand for a particular instrument type is made more efficient.

In an example, each knowledge graph node comprises at least one searchable attribute or property, the at least one searchable attribute or property comprising at least one of instrument type, issue, action step.

This makes searching with respect to instruments, issues, and actions more efficient.

In an example, the input unit is configured to receive at least one new service report. Each new service report comprises natural language. The input unit is configured to provide the at least one new service report to the knowledge graph generator. The knowledge graph generator is configured to utilize the LLM to identify entries from the natural language in the at least one new service report. The identified entries comprise names and types of instruments, issues that need to be addressed for those instruments, and actions taken by service technicians to mitigate the issues. The knowledge graph generator is configured to utilize the identified entries to form one or more new rules, where each new rule comprises a tuple of one instrument, one issue, and an action step or series of action steps taken to mitigate the issue. For each new rule the knowledge graph generator is configured to utilize the new rule to generate a plurality of new knowledge graph nodes, where the instrument type, issue, and each action step are transformed into separate new knowledge graph nodes.

In an example, the knowledge graph generator is configured to search the knowledge graph to determine if a linked node group has a knowledge graph node with an instrument type that is the same as an instrument type associated with a new rule. The knowledge graph generator is configured to link the plurality of new knowledge graph nodes associated with the new rule to knowledge graph nodes of the linked node group in the knowledge graph that has the knowledge graph node with an instrument type that is the same as the instrument type associated with a new rule. The knowledge graph generator is configured to form a new node group comprising the plurality of new knowledge graph nodes in the knowledge graph if no knowledge graph node with an instrument type that is the same as an instrument type associated with the new rule is found within the knowledge graph.

In an example, the knowledge graph generator is configured to search the knowledge graph to determine if a linked node group has a knowledge graph node with an issue that is the same or similar to an issue associated with a new rule. The knowledge graph generator is configured to link the plurality of new knowledge graph nodes associated with the new rule to knowledge graph nodes of the linked node group in the knowledge graph that has the knowledge graph node with an issue that is the same or similar to the issue associated with a new rule. The knowledge graph generator is configured to form a new node group comprising the plurality of new knowledge graph nodes in the knowledge graph if no knowledge graph node with an issue that is the same or similar to an issue associated with the new rule is found within the knowledge graph.

Thus, the knowledge graph can be efficiently and effectively updated when new service reports are available, to augment how issues on a particular instrument type can be mitigated and also to expand the knowledge graph with issues relating to new instrument types to ever expand the utility of the knowledge graph.

In an example, the input unit is configured to receive multimodal data. The multimodal data is not in a textual form. The input unit is configured to provide the multimodal data to the knowledge graph generator. The knowledge graph generator is configured to analyze the multimodal data and/or analyze information associated with the multimodal data to determine an associated node group in the knowledge graph and attach the multimodal data to the associated node group.

Thus, the knowledge graph can be augmented with non-textual information such as photos and bodycam feeds from service technicians, videos, sensor readings, recordings from AR and VR sessions with remote experts and so forth.

In an example, the system comprises an output unit 30. The output unit is configured to output the knowledge graph.

Thus, the knowledge graph can then be used on/by another system.

From the above, it is clear that an associated exemplar knowledge graph generating method comprises the following steps:
- receiving, by an input unit, a plurality of service reports, wherein each service report comprises natural language;
- providing, by the input unit, the plurality of service reports to a knowledge graph generator;
- implementing, by the knowledge graph generator, a Large Language Model (LLM);
- utilizing, by the knowledge graph generator, the LLM to identify entries from the natural language in the plurality of service reports, wherein the identified entries comprise names and types of instruments, issues that need to be addressed for those instruments, and actions taken by service technicians to mitigate the issues;
- utilizing, by the knowledge graph generator, the identified entries to form a plurality of rules, wherein each rule comprises a tuple of one instrument type, one issue, and an action step or series of action steps taken to mitigate the issue;
- utilizing, by the knowledge graph generator, the plurality of rules to generate a plurality of knowledge graph nodes, wherein each instrument type, issue, and action step are transformed into separate knowledge graph nodes; and
- utilizing, by the knowledge graph generator, the plurality of knowledge graph nodes to generate a knowledge graph, the generation comprising forming a plurality of node groups, wherein each node group comprises a plurality of knowledge graph nodes that are linked together.

It is to be noted that implementation of a Large Language Model (LLM), can mean utilizing an existing LLM to fit the specific needs, or can mean that an LLM is in effect constructed for the specific needs.

In an example, the plurality of service reports comprise natural language in a plurality of different languages, the plurality of different languages comprising two or more of English, German, French, Italian, Spanish, French, Portuguese, Japanese, Chinese.

Thus, the method works in one unified language, but is able to work with reports from many languages or indeed a single report with more than one language within it.

In an example, each knowledge graph node comprises at least one searchable attribute or property, the at least one searchable attribute or property comprising at least one of instrument type, issue, action step.

In an example, the method comprises:
- receiving, by the input unit, at least one new service report, wherein each new service report comprises natural language;
- providing, by the input unit, the at least one new service report to the knowledge graph generator;
- utilizing, by the knowledge graph generator, the LLM to identify entries from the natural language in the at least one new service report, wherein the identified entries comprise names and types of instruments, issues that need to be addressed for those instruments, and actions taken by service technicians to mitigate the issues;

- utilizing, by the knowledge graph generator, the identified entries to form one or more new rules, wherein each new rule comprises a tuple of one instrument, one issue, and an action step or series of action steps taken to mitigate the issue; and
- for each new rule the method comprises utilizing, by the knowledge graph generator, the new rule to generate a plurality of new knowledge graph nodes, wherein the instrument type, issue, and each action step are transformed into separate new knowledge graph nodes.

In an example, the method comprises:
- searching, by the knowledge graph generator, the knowledge graph to determine if a linked node group has a knowledge graph node with an instrument type that is the same as an instrument type associated with a new rule;
- linking, by the knowledge graph generator, the plurality of new knowledge graph nodes associated with the new rule to knowledge graph nodes of the linked node group in the knowledge graph that has the knowledge graph node with an instrument type that is the same as the instrument type associated with a new rule; or
- forming, by the knowledge graph generator, a new node group comprising the plurality of new knowledge graph nodes in the knowledge graph if no knowledge graph node with an instrument type that is the same as an instrument type associated with the new rule is found within the knowledge graph.

In an example, the method comprises:
- searching, by the knowledge graph generator, the knowledge graph to determine if a linked node group has a knowledge graph node with an issue that is the same or similar to an issue associated with a new rule;
- linking, by the knowledge graph generator, the plurality of new knowledge graph nodes associated with the new rule to knowledge graph nodes of the linked node group in the knowledge graph that has the knowledge graph node with an issue that is the same or similar to the issue associated with a new rule; or
- forming, by the knowledge graph generator, a new node group comprising the plurality of new knowledge graph nodes in the knowledge graph if no knowledge graph node with an issue that is the same or similar to an issue associated with the new rule is found within the knowledge graph.

In an example, the method comprises:
- receiving, by the input unit, multimodal data, wherein the multimodal data is not in a textual form;
- providing, by the input unit. the multimodal data to the knowledge graph generator; and
- analyzing, by the knowledge graph generator, the multimodal data and/or analyze information associated with the multimodal data to determine an associated node group in the knowledge graph and attaching the multimodal data to the associated node group.

In an example, the method comprises outputting, by an output unit 30, the knowledge graph.

Thus, the knowledge graph can then be used on/by another system.

Thus, the new development provides a solution on how to extract rules from Service Reports using Large Language Models (LLMs), store the collection of generated rules, search through them, and augment the collected knowledge by adding new rules or editing existing rules, with the help of a Knowledge Graph.

The inventors arrived at the new development, from an understanding that searching for relevant information is an important activity for most professional groups, and is a means for achieving competitive advantage. In the context of maintenance of electrical equipment, searching for relevant maintenance rules helps in faster troubleshooting of faults, thereby reducing downtime of customer equipment and facilities.

However, the inventors realized that searching for information which is most relevant to the issue at hand is a complex task. Relevant information is dispersed across manuals and service reports in multiple languages, and is not easily accessible in an integrated, easily searchable manner.

The inventors apprised themselves with knowledge that recently, due to the rapid development of Generative Al the application of Large Language Models (LLMs) for information extraction from natural language text has gained significant traction. The models are effective in scenarios that require the parsing of large, unstructured texts in different languages.

The inventors realized that such state-of-the-art LLMs could be utilized in a new way to provide an effective support tool for service personnel, which led to the new development.

The new development, in a detailed embodiment, in effective provides a solution pipeline to:
(i) extract electrical equipment maintenance rules from multilingual natural language text in service reports,
(ii) employ a knowledge graph to appropriately store the extracted rules, which makes searching and information retrieval efficient, and
(iii) update the knowledge graph appropriately when new rules are extracted from new service reports.
   Furthermore,
(iv) the knowledge graph can be augmented with non-textual information as well.

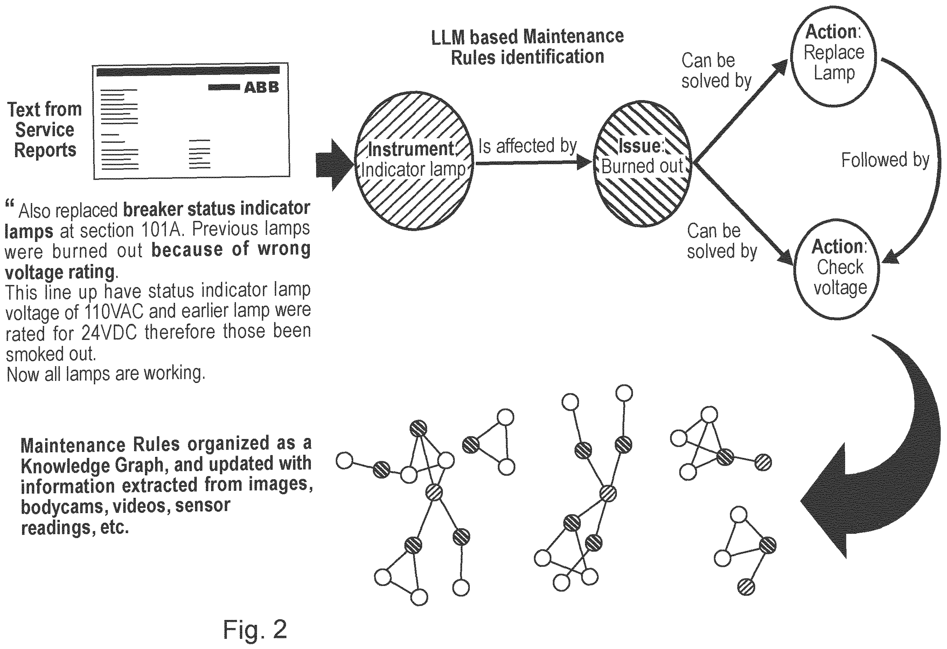

Fig. 2 shows a detailed embodiment of a knowledge graph generation system, showing steps to convert from natural language text to searchable knowledge graph of maintenance rules.

Referring to Fig. 2 the new solution pipeline consists of the following stages.

### Stage 1: Extraction of rules from multilingual natural language text in service reports:

Maintenance rules are extracted from multilingual service reports using state-of-the-art (SOTA) Large Language Models (LLMs) in a two-step approach. (The SOTA LLMs are able to parse texts different languages (such as English, German, Italian, Spanish, French, etc.) due to the vast amounts of data they are trained on.)

In the first step, the LLM identifies and extracts appropriate entities from the natural language text of the report. Identified entities include the name and type of electrical instrument(s) mentioned in the report, the problems or issues that need to be addressed for those instrument(s), and the actions taken by the service technician to mitigate the issue.

Then, in the second step, these identified entities are linked together to form rules. Each rule is a tuple of one instrument, one issue, and the series of actions taken to mitigate the issue. Multiple rules can be extracted from a single report, and hence the second step is needed to correctly identify such rules from all the entities identified in the first step.

### Stage 2: Storage of rules in a Knowledge Graph:

After the collection of rules have been identified from Stage 1, they are inserted into a knowledge graph. Each instrument, issue, and step in the list of actions are transformed into knowledge graph nodes, and they are linked together appropriately. Nodes in a knowledge graph can have different attributes and properties, such that all "Instrument-nodes" are of one "type", all "Issue-nodes" are of another type, and so on. This makes searching only among instruments or issues fast and efficient.

### Stage 3: Updating the Knowledge Graph when new rules are extracted:

When new rules are identified from new service reports, first, all existing Instrument Nodes in the Knowledge Graph are checked to see if the instrument already exists in the graph, or this is a new instrument that has not been seen before. If the instrument already exists in the graph, then the new rule is attached to the existing instrument node. Else, a new node for the instrument is created.

Next, all "Issue-nodes" are searched against the issue in the new rule. If a similar issue is found in the knowledge graph, then the newly extracted issue is linked to the existing issue. This makes searching for "related issues" possible, which is quite important for troubleshooting activities.

Searching for related issues is a technical challenge, since two issues can be semantically identical, yet use different words, synonyms and linguistic patterns. A SOTA LLM helps to identify the most semantically similar search results for a given issue. However, the final call of deciding if two issues are similar or not is taken by a domain expert, who is the "owner" of the Knowledge Graph of rules.

### Stage 4: Augmenting Knowledge Graph with multimodal data:

A knowledge graph can efficiently store multimodal sources of data. Therefore, the knowledge graph generated in the previous steps can be augmented by addition data sources, such as photos and bodycam feeds from service technicians, videos, sensor readings, recordings from AR and VR sessions with remote experts (from ABB products RAISE and CLOSER), and so on.

The new development enables, with proper tuning, high-quality self-updating knowledge graphs to be generated from lengthy, multilingual technical reports from different regions across the world. This helps in faster corrective maintenance, and helps to plan more accurate preventive maintenance of electrical equipment, thereby reducing customer downtime.

Furthermore, the same solution pipeline can be used for more efficient use of unstructured data in other industrial domains, potentially reducing reliance on manual expertise and improving the organization of large-scale documentation.

In another exemplary embodiment, a computer program or computer program element is provided that is characterized by being configured to execute the method steps of the method according to one of the preceding embodiments, on an appropriate processor or system.

The computer program element might therefore be stored on a computer unit, which might also be part of an embodiment. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

## Claims

1. A knowledge graph generation system (100), comprising:
- an input unit (20); and
- a knowledge graph generator (10);
wherein the input unit is configured to receive a plurality of service reports, wherein each service report comprises natural language;
wherein the input unit is configured to provide the plurality of service reports to the knowledge graph generator;
wherein the knowledge graph generator is configured to implement a Large Language Model (LLM);
wherein the knowledge graph generator is configured to utilize the LLM to identify entries from the natural language in the plurality of service reports, wherein the identified entries comprise names and types of instruments, issues that need to be addressed for those instruments, and actions taken by service technicians to mitigate the issues;
wherein the knowledge graph generator is configured to utilize the identified entries to form a plurality of rules, wherein each rule comprises a tuple of one instrument type, one issue, and an action step or series of action steps taken to mitigate the issue;
wherein the knowledge graph generator is configured to utilize the plurality of rules to generate a plurality of knowledge graph nodes, wherein each instrument type, issue, and action step are transformed into separate knowledge graph nodes; and
wherein the knowledge graph generator is configured to utilize the plurality of knowledge graph nodes to generate a knowledge graph, the generation comprising forming a plurality of node groups, wherein each node group comprises a plurality of knowledge graph nodes that are linked together.

2. Knowledge graph generation system according to claim 1, wherein the plurality of service reports comprise natural language in a plurality of different languages, the plurality of different languages comprising two or more of English, German, French, Italian, Spanish, French, Portuguese, Japanese, Chinese.

3. Knowledge graph generation system according to any of claims 1-2, wherein each knowledge graph node comprises at least one searchable attribute or property, the at least one searchable attribute or property comprising at least one of instrument type, issue, action step.

4. Knowledge graph generation system according to any of claims 1-3, wherein the input unit is configured to receive at least one new service report, wherein each new service report comprises natural language, wherein the input unit is configured to provide the at least one new service report to the knowledge graph generator, wherein the knowledge graph generator is configured to utilize the LLM to identify entries from the natural language in the at least one new service report, wherein the identified entries comprise names and types of instruments, issues that need to be addressed for those instruments, and actions taken by service technicians to mitigate the issues, wherein the knowledge graph generator is configured to utilize the identified entries to form one or more new rules, wherein each new rule comprises a tuple of one instrument, one issue, and an action step or series of action steps taken to mitigate the issue, wherein for each new rule the knowledge graph generator is configured to utilize the new rule to generate a plurality of new knowledge graph nodes, wherein the instrument type, issue, and each action step are transformed into separate new knowledge graph nodes.

5. Knowledge graph generation system according to claim 4, wherein the knowledge graph generator is configured to search the knowledge graph to determine if a linked node group has a knowledge graph node with an instrument type that is the same as an instrument type associated with a new rule, and link the plurality of new knowledge graph nodes associated with the new rule to knowledge graph nodes of the linked node group in the knowledge graph that has the knowledge graph node with an instrument type that is the same as the instrument type associated with a new rule or form a new node group comprising the plurality of new knowledge graph nodes in the knowledge graph if no knowledge graph node with an instrument type that is the same as an instrument type associated with the new rule is found within the knowledge graph.

6. Knowledge graph generation system according to any of claims 4-5, wherein the knowledge graph generator is configured to search the knowledge graph to determine if a linked node group has a knowledge graph node with an issue that is the same or similar to an issue associated with a new rule, and link the plurality of new knowledge graph nodes associated with the new rule to knowledge graph nodes of the linked node group in the knowledge graph that has the knowledge graph node with an issue that is the same or similar to the issue associated with a new rule or form a new node group comprising the plurality of new knowledge graph nodes in the knowledge graph if no knowledge graph node with an issue that is the same or similar to an issue associated with the new rule is found within the knowledge graph.

7. Knowledge graph generation system according to any of claims 1-6, wherein the input unit is configured to receive multimodal data, wherein the multimodal data is not in a textual form, wherein the input unit is configured to provide the multimodal data to the knowledge graph generator, and wherein the knowledge graph generator is configured to analyze the multimodal data and/or analyze information associated with the multimodal data to determine an associated node group in the knowledge graph and attach the multimodal data to the associated node group.

8. Knowledge graph generation system according to any of claims 1-7, wherein the system comprises an output unit (30), wherein the output unit is configured to output the knowledge graph.

9. A knowledge graph generating method, comprising:
- receiving, by an input unit, a plurality of service reports, wherein each service report comprises natural language;
- providing, by the input unit, the plurality of service reports to a knowledge graph generator;
- implementing, by the knowledge graph generator, a Large Language Model (LLM);
- utilizing, by the knowledge graph generator, the LLM to identify entries from the natural language in the plurality of service reports, wherein the identified entries comprise names and types of instruments, issues that need to be addressed for those instruments, and actions taken by service technicians to mitigate the issues;
- utilizing, by the knowledge graph generator, the identified entries to form a plurality of rules, wherein each rule comprises a tuple of one instrument type, one issue, and an action step or series of action steps taken to mitigate the issue;
- utilizing, by the knowledge graph generator, the plurality of rules to generate a plurality of knowledge graph nodes, wherein each instrument type, issue, and action step are transformed into separate knowledge graph nodes; and
- utilizing, by the knowledge graph generator, the plurality of knowledge graph nodes to generate a knowledge graph, the generation comprising forming a plurality of node groups, wherein each node group comprises a plurality of knowledge graph nodes that are linked together.

10. Method according to claim 9, wherein each knowledge graph node comprises at least one searchable attribute or property, the at least one searchable attribute or property comprising at least one of instrument type, issue, action step.

11. Method according to any of claims 9-10, wherein the method comprises:
- receiving, by the input unit, at least one new service report, wherein each new service report comprises natural language;
- providing, by the input unit, the at least one new service report to the knowledge graph generator;
- utilizing, by the knowledge graph generator, the LLM to identify entries from the natural language in the at least one new service report, wherein the identified entries comprise names and types of instruments, issues that need to be addressed for those instruments, and actions taken by service technicians to mitigate the issues;
- utilizing, by the knowledge graph generator, the identified entries to form one or more new rules, wherein each new rule comprises a tuple of one instrument, one issue, and an action step or series of action steps taken to mitigate the issue;
- for each new rule the method comprises utilizing, by the knowledge graph generator, the new rule to generate a plurality of new knowledge graph nodes, wherein the instrument type, issue, and each action step are transformed into separate new knowledge graph nodes.

12. Method according to claim 11, wherein the method comprises:
- searching, by the knowledge graph generator, the knowledge graph to determine if a linked node group has a knowledge graph node with an instrument type that is the same as an instrument type associated with a new rule;
- linking, by the knowledge graph generator, the plurality of new knowledge graph nodes associated with the new rule to knowledge graph nodes of the linked node group in the knowledge graph that has the knowledge graph node with an instrument type that is the same as the instrument type associated with a new rule; or
- forming, by the knowledge graph generator, a new node group comprising the plurality of new knowledge graph nodes in the knowledge graph if no knowledge graph node with an instrument type that is the same as an instrument type associated with the new rule is found within the knowledge graph.

13. Method according to any of claims 11-12, wherein the method comprises:
- searching, by the knowledge graph generator, the knowledge graph to determine if a linked node group has a knowledge graph node with an issue that is the same or similar to an issue associated with a new rule;
- linking, by the knowledge graph generator, the plurality of new knowledge graph nodes associated with the new rule to knowledge graph nodes of the linked node group in the knowledge graph that has the knowledge graph node with an issue that is the same or similar to the issue associated with a new rule; or
- forming, by the knowledge graph generator, a new node group comprising the plurality of new knowledge graph nodes in the knowledge graph if no knowledge graph node with an issue that is the same or similar to an issue associated with the new rule is found within the knowledge graph.

14. Method according to any of claims 9-13, wherein the method comprises:
- receiving, by the input unit, multimodal data, wherein the multimodal data is not in a textual form;
- providing, by the input unit. the multimodal data to the knowledge graph generator;
- analyzing, by the knowledge graph generator, the multimodal data and/or analyze information associated with the multimodal data to determine an associated node group in the knowledge graph and attaching the multimodal data to the associated node group.

15. A computer program element for controlling a processor to carry out the method of any of claims 9-14.
